# EUROPEAN PATENT APPLICATION

(11) **EP 1 382 246 A1**
(43) Date of publication of application: **21.01.2004**
(21) Application number: 02714552.3
(22) Date of filing: 09.04.2002
(51) Int. Cl.: A01N 37/44, A01N 43/90, A01G 7/06

(54) **GROWTH PROMOTERS FOR GRAMINEOUS PLANTS**

(30) Priority: 27.04.2001 JP 2001130504; 04.06.2001 JP 2001168156
(71) Applicant: Ajinomoto Co., Inc., Tokyo 104-8315 (JP)
(72) Inventor: KURAUCHI,M. Ajinomoto Co., Inc., Aminoscience Labs, Kawasaki-shi, Kanagawa 210-8681 (JP); TAKEUCHI, Makoto c/o Ajinomoto Co., INC., Chuo-ku, Tokyo 104-8315 (JP); MIYAZAWA,Y. Ajinomoto Co., Inc., Aminoscience Labs, Kawasaki-shi, Kanagawa 210-8681 (JP); SATO,H. Ajinomoto Co., Inc., Aminoscience Labs, Kawasaki-shi, Kanagawa 210-8681 (JP)
(74) Representative: Strehl Schübel-Hopf & Partner
(86) International application number: PCT/JP2002/003525
(87) International publication number: WO 2002/089580

(57) **Abstract**

In this application is disclosed a growth promoter for gramineous plants such as lawns and the like, and the like, which comprises, as the active ingredient, serine alone or both serine and inosine. The growth promoter is not a chemical fertilizer and does not adversely affect the environment and humans and animals.

## Description

### Technical Field

The present invention relates to a growth promoter for plants such as gramineous plants. More specifically, it relates to a growth promoter for gramineous plants which promoter contains serine which is effective for lawn plants.

### Background Art

Heretofore, several examples of amino acid-related substance(s) being applied to plants are known.

For example, (a) Japanese Patent Application Laid-Open (Kokai) No. 67051/1973 discloses a fructification/fruit-fleshliness promoter containing nucleotides or at least one of nucleotides and proline.

(b) Japanese Patent Application Laid-Open (Kokai) No. 279405/1998 discloses a method for preventing the withering of a pine tree by sprinkling a plant activating agent comprising proline as the main ingredient and ionized alkaline water on a pine tree at the above-ground parts and/or by giving an ionized acidic water to a pine tree at the underground parts.

(c) Japanese Patent Application Laid-Open (Kokai) No. 215503/1987 discloses a method for improving the quality of grapes by sprinkling to the surfaces of grapevine leaves a solution containing at least one amino acid selected from the group consisting of aspartic acid, phenylalanine, glutamic acid, arginine, tryptophan and alanine and at least one nucleic acid base selected from the group consisting of adenine and uracil.

However, there have been known no examples in which a growth promoting effect of serine alone or in combination with inosine upon gramineous plants has been confirmed.

(d) Japanese Patent Application Laid-Open (Kokai) No. 211607/1994 discloses production methods of a frost damage inhibitor and a growth inhibitor which use serine.

However, the concentration at which the inhibitory effect of serine is confirmed ranges from 50 mM to 100 mM, which is clearly different from the application concentration of serine as the growth promoter for gramineous plants according to the present invention.

Meanwhile, for example, lawns are used in many places including parks, gardens, ball game parks and the like, and indispensable to golf courses in particular. However, large quantities of fertilizers and agricultural chemicals have been conventionally used to keep lawns alive, and their use has become a serious problem from the point of view of environmental protection. For example, to prevent the leaves-rotten disease of lawns, the sprinkling of synthetic bactericides (agricultural chemicals) has been conventionally carried out. However, this may exert an undesirable influence on the natural environment.

Further, lawns, cold-district lawns in particular, undergo growth suspension indirectly and blight directly due to high-temperature stresses, and only measure therefor is to improve ventilation.

With respect to gramineous plants such as lawns and the like, it is well known to give them amino acids as the nitrogen source fertilizer. However, such amino acids are in general in the form of a multicomponent fertilizer such as a hydrolysate of plants or/and animals or a fermentation waste solution,' and the contents of such multicomponent fertilizer are not clear. Since a reduction in use of fertilizers is demanded due to such problems as accumulation of inorganic substances in the soil, and the like, a fast-acting fertilizer (fast-acting nutritional supplement) capable of supplying a required amount of nitrogen efficiently is required. In this application, a urea dusting powder for the leaf surface(s) is often used. However, this is liable to be accumulated in the soil, and such a phenomenon as leaf scald may be observed depending on the concentration thereof. Hence, a growth promoter which can be used as a substitute therefor is required.

### Disclosure of the Invention

It is an object of the present invention to provide a growth promoter for plants such as gramineous plants and the like, which is not a chemical fertilizer and does not adversely affect the environment and humans and animals, and a method of applying the promoter.

The present inventors have made intensive studies so as to achieve the above object. As a result, they have found, for the first time, that amino acids, serine, proline, and the like, in particular, exert a significant effect on promotion/of the growth of gramineous plants, and that the effect is enhanced by use of the amino acid(s) in combination with inosine in particular out of various nucleotides. Based on these findings, they have completed the present invention.

Accordingly, the present invention relates to a growth promoter for plants such as gramineous plants and the like, which comprises serine as the active ingredient, and a method of promoting the growth of plants such as gramineous plants and the like by applying such a growth promoter to the soil or hydroponic water or by sprinkling the promoter on the surfaces of leaves.

Hereinafter, the present invention will be described in detail.

Plants to which the growth promoter of the present invention is to be applied include gramineous plants such as lawns, rice plants and pastures in particular. Of these, the growth promoter of the present invention is effective on lawns in particular.

Serine does not necessarily have to be a refined product, and may be in the form of a protein hydrolysate or an amino acid mixture enriched with serine as long as there are no side effects such as salt damage, leaf scald and the like. However, in the case where serine is applied in the form of a mixture with hydroponic water, and the like, it is needless to say that such serine is preferred in the form which contains no impurities which may cause contamination and putrefaction of the hydroponic water, whereby the hydroponic water added with the serine is prevented from being contaminated and putrefied.

The growth promoter of the present invention for plants such as gramineous plants and the like which contains serine as the active ingredient may take the application form of a solution in which the promoter has been dissolved in a proper solvent such as water or the like as appropriate so as to be suitable for use via the soil or hydroponic water. When the growth promoter is to be sprinkled on the surfaces of leaves, a solution with a serine concentration of 0.2 to 150 ppm, more preferably 0.2 to 100 ppm is effective as the application form in the case of the foliage application. Further, the inventive growth promoter may be prepared into a powder, granules or tablets by use of an appropriate filler, binder or the like. If the growth promoter is prepared into a solution by dissolving in a solvent, a bactericide, a surfactant or a preservative may be added thereto at the time of preparation of the solution from the viewpoint of prevention of putrefaction of the solution. Further, if the promoter is to be sprinkled on the surfaces of leaves, the concurrent use of a spreading agent together with the promoter is effective.

When such a growth promoter is to be applied to, for example, lawns, pastures, and the like, it may be applied as an additional fertilizer or applied after lawn mowing or in an initial stage of blight.

Furthermore, illustrative examples of fertilizer application methods (application methods) include sprinkling on leaf surfaces, sprinkling over the soil, and addition to hydroponic water, and the like. However, it is particularly effective that the serine is applied onto the above-ground parts of plants whereby it is absorbed via the surfaces of the leaves of plants such as lawns, and the like, in particular, and on the other hand, the inosine is sprinkled over the soil whereby it is absorbed by the roots. In this case, the serine and the inosine are not applied in the form of a lawn blight inhibiting agent or fast-acting nutritional supplement containing both.serine and inosine. Instead, the serine and the inosine are sprinkled onto the above-ground parts of plants and over the soil, respectively, separately but without an undesirably long interval between their applications.

The amount to be applied of the growth promoter of the present invention varies depending on the time of application, the type of gramineous plants (e.g., lawn, rice plant, pasture or the like) and the cultivation density and growth stage of the gramineous plant. In short, the promoter is applied in such an amount that the degree of growth of lawns for example, grown by using the growth promoter of the present invention is superior to the degree of growth of lawns grown under exactly the same conditions as those for the above lawns except that the growth promoter of the present invention is not used. This amount can be determined by some preliminary comparison test which can be easily conducted by those skilled in the art. As has been described above, for example, in the case of sprinkling on the leaf surfaces in particular, a solution with a serine concentration of 0.2 to 150 ppm, more preferably 0.2 to 100 ppm, is' effective. Thus, the effect of promoting the growth of gramineous plants can be achieved at such a low concentration.

As for the amount to be applied of inosine, it is applied in an amount of 0.05 to 1 ppm based on the soil (5 to 100 g per 100 tons of the soil) in the case of sprinkling over the soil, and in an amount of 0.1 to 5 ppm based on the hydroponic water in the case of hydroponics.

### Best Mode for Carrying out the Invention

Hereinafter, the present invention will be further described with reference to Examples.

### Example 1 (Soil Culture of Lawns)

Lawn sods having a diameter of 4 cm and a thickness of 3 cm (bent grass; breed name: BENCROSS) were each planted in 1/50 m² Wagner pots, and a leaf surface sprinkling test was carried out on a group of three pots. To the soil of each pot, a chemical fertilizer (12-8-10) was add-mixed as the initial fertilizer in an amount of 1 g/pot. Serine was diluted with water to the concentrations shown in the following Table 1 and sprinkled by means of a sprinkler on the 10th day and 24th day after planting.

On the 77th day after planting, the plant parts exposed on the ground were cut, and the weight thereof after dried was measured. As a result, as shown in Table 1, good growth was observed for the serine-treated areas, particularly 18.3 ppm-treated areas.

**Table 1**

| Serine Concentration | Weight of Cut Stem/Leaf after Dried (g/pot) | | | | Percentage |
|---|---|---|---|---|---|
| Control | 1.19 | 1.21 | 1.27 | 1.22 ± 0.04 | 100 |
| 18.3 ppm | 2.17 | 2.43 | 2.20 | 2.27 ± 0.12 | 185* |
| 183 ppm | 1.26 | 1.47 | 1.08 | 1.27 ± 0.16 | 104 |

| | | | | | |
|---|---|---|---|---|---|
| *There is a statistically significant difference. | | | | | |

### Example 2 (Hydroponics (Water Culture) of Lawns)

Seedlings of lawns (western lawns; Evergreen Lawn Grass) were raised and were divided into two groups, A and B, each consisting of 60 seedlings so as to carry out water culture. A given amount of a liquid fertilizer was added to a water culture.solution, to which inosine was then added to a concentration of 0.2 ppm. The testing period started on October 6, 1999 and ended on November 1, 1999 (26 days). Group A was set as a control area. As for Group B, 5 ml of a solution so prepared as to have a serine concentration of 20 ppm was sprinkled over the surfaces of leaves every day over a period of 15 days.

On the 26th day, the weight of 5 average grown seedlings selected from each group was measured. The results are shown in the following Table 2. As shown in Table 2, the serine-treated area was good with respect to all of the root length, the leaf length and the total weight in the raw state.

**Table 2**

| | Average Leaf Length (cm) | Root Length (cm) | Total Weight in Raw State* (g) |
|---|---|---|---|
| Control Area (Group A) | 18 | 2.3 | 0.17 |
| Serine-Leaf Surface Sprinkled Area (Group B) | 22 | 4.1 | 0.35 |

| | | | |
|---|---|---|---|
| * It refers to the total weight of the plant portions exposed on the ground and the roots of 5 undried lawn plants. | | | |

### Industrial Applicability

According to the present invention, the promotion of the growth of gramineous plants such as lawns and the like, can be easily achieved by use of serine alone or in combination with inosine.

## Claims

1. A growth promoter for gramineous plants which comprises serine as the active ingredient.

2. The growth promoter for gramineous plants of Claim 1 which is in the liquid application form having a serine concentration of 0.2 to 150 ppm.

3. A growth promoter for plants which comprises, as the active ingredient, both serine and inosine.

4. The growth promoter for plants of Claim 3 which is in the liquid application form having a serine concentration of 0.2 to 150 ppm and is to be applied in an amount of 0.05 to 1 ppm in terms.of inosine based on the soil when sprinkled over the soil, and in an amount of 0.1 to 5 ppm in terms of inosine based on the hydroponic water when added thereto in the hydroponics.

5. A method of promoting the growth of plants which comprises sprinkling the growth promoter for plants of any one of Claim 1 to 4 on the surfaces of leaves or over the soil.

6. A method of promoting the growth of plants which comprises using serine and inosine concurrently.
